(19) Europäisches Patentamt / European Patent Office / Office européen des brevets

(11) **EP 4 492 710 A1**

(12) **EUROPEAN PATENT APPLICATION**
published in accordance with Art. 153(4) EPC

(43) Date of publication:
**15.01.2025 Bulletin 2025/03**

(21) Application number: **23784198.6**

(22) Date of filing: **28.03.2023**

(51) International Patent Classification (IPC):
**H04B 17/309** (2015.01)

(52) Cooperative Patent Classification (CPC):
**H04B 17/309; H04W 4/20; H04W 28/02; H04W 36/00**

(86) International application number:
**PCT/CN2023/084340**

(87) International publication number:
**WO 2023/193634 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.04.2022 CN 202210362339**

(71) Applicant: **ZTE Corporation**
**Shenzhen, Guangdong 518057 (CN)**

(72) Inventors:
- **LI, Weimin**
  **Shenzhen, Guangdong 518057 (CN)**
- **YUAN, Zhifeng**
  **Shenzhen, Guangdong 518057 (CN)**
- **LI, Zhigang**
  **Shenzhen, Guangdong 518057 (CN)**

(74) Representative: **Aipex B.V.**
**Vestdijk 51**
**5611 CA Eindhoven (NL)**

(54) **TRANSMISSION METHOD, ELECTRONIC DEVICE AND STORAGE MEDIUM**

(57)    Embodiments of the present application provide a transmission method, an electronic device and a storage medium. The method includes as follows: performing M repeated transmissions on a first symbol, where the first symbol includes a symbol of X pilots, X is an integer greater than or equal to 0, and M is an integer greater than or equal to 1; and performing N repeated transmissions on a second symbol, where the second symbol includes a data symbol, and N is an integer greater than or equal to 1.

Perform M repeated transmissions on a first symbol, where the first symbol includes a symbol of X pilots, X is an integer greater than or equal to 0, and M is an integer greater than or equal to 1 — 110

Perform N repeated transmissions on a second symbol, where the second symbol includes a data symbol, and N is an integer greater than or equal to 1 — 120

**FIG. 1**

# Description

TECHNICAL FIELD

The present application relates to the field of wireless communication technology, for example, a transmission method and apparatus, an electronic device and a storage medium.

BACKGROUND

In grant-free transmission, a user equipment (UE) may autonomously send data without sending a scheduling request and waiting for a dynamic grant. Therefore, grant-free transmission can reduce signaling overhead, transmission delay and terminal power consumption. Moreover, grant-free transmission may also be combined with non-orthogonal transmission to increase the number of access users.

There are two common types of grant-free transmission, that is, configured grant transmission and contention-based grant-free transmission. For configured grant transmission, a base station preconfigures or semi-persistently configures transmission resources for each UE, and the resources may include time-frequency resources and pilots. Through configuration, the base station can ensure that multiple UEs use different resources, thereby avoiding collisions and facilitating user identification and detection. However, in a case of a large number of UEs, the base station may also allow, through configuration, that some UEs use the same time-frequency resources and pilots, that is, allow collisions. As a result, collisions occur due to that multiple UEs use the same time-frequency resources and pilots. In contention-based grant-free transmission, when a UE has a service transmission requirement, the UE may randomly select transmission resources for contention-based access and transmission, and the case where multiple UEs use the same time-frequency resources and pilots may also exist. The grant-free transmission method in the related art can support a certain number of UEs to perform transmission on the same time-frequency resources in conventional coverage scenarios. However, in severe or extreme coverage scenarios, there are many weak coverage or poor coverage UEs with high transmission loss and low signal-to-noise ratio. According to the transmission methods in the related art, the transmission performance of these UEs cannot be ensured, and a relatively small number of users are supported, resulting in poor overall system performance.

SUMMARY

Embodiments of the present application provide a transmission method, an electronic device and a storage medium to solve the problem in the related art of poor transmission performance of weak coverage terminals and a small number of supported users.

The embodiments of the present application provide a transmission method. The method is applied to a transmitting side and includes the following.

M repeated transmissions are performed on a first symbol, where the first symbol includes a symbol of X pilots, X is an integer greater than or equal to 0, and M is an integer greater than or equal to 1.

N repeated transmissions are performed on a second symbol, where the second symbol includes a data symbol, and N is an integer greater than or equal to 1.

The embodiments of the present application further provide a transmission method. The transmission method is applied to a receiving side and includes the following.

A symbol obtained after M repeated transmissions of a first symbol is acquired, where the first symbol includes a symbol of X pilots, X is an integer greater than or equal to 0, and M is an integer greater than or equal to 1.

A symbol obtained after N repeated transmissions of a second symbol is acquired, where the second symbol includes a data symbol, and N is an integer greater than or equal to 1.

The embodiments of the present application further provide an electronic device. The electronic device includes at least one processor and a memory configured to store at least one program.

The at least one program, when executed by the at least one processor, causes the at least one processor to perform any method in the embodiments of the present application.

The embodiments of the present application further provide a computer-readable storage medium storing at least one program which, when executed by at least one processor, causes the at least one processor to perform any method in the embodiments of the present application.

BRIEF DESCRIPTION OF DRAWINGS

FIG. 1 is a flowchart of a transmission method according to an embodiment of the present application;

FIG. 2 is an example diagram of a transmission method according to an embodiment of the present application;

FIG. 3 is an example diagram of another transmission method according to an embodiment of the present application;

FIG. 4 is an example diagram of another transmission method according to an embodiment of the present application;

FIG. 5 is an example diagram of another transmission method according to an embodiment of the present application;

FIG. 6 is a flowchart of another transmission method according to an embodiment of the present application;

FIG. 7 is a structural diagram of a transmission apparatus according to an embodiment of the present application;

FIG. 8 is a structural diagram of another transmission apparatus according to an embodiment of the present application; and

FIG. 9 is a structural diagram of an electronic device according to an embodiment of the present application.

DETAILED DESCRIPTION

It is to be understood that the embodiments described herein are intended to explain the present application, not to limit the present application.

Suffixes such as "module", "component" or "unit" used for indicating elements in the subsequent description are used merely for facilitating the description of the present application and have no particular meaning in themselves. Therefore, "module", "component" or "unit" may be used in a mixed manner.

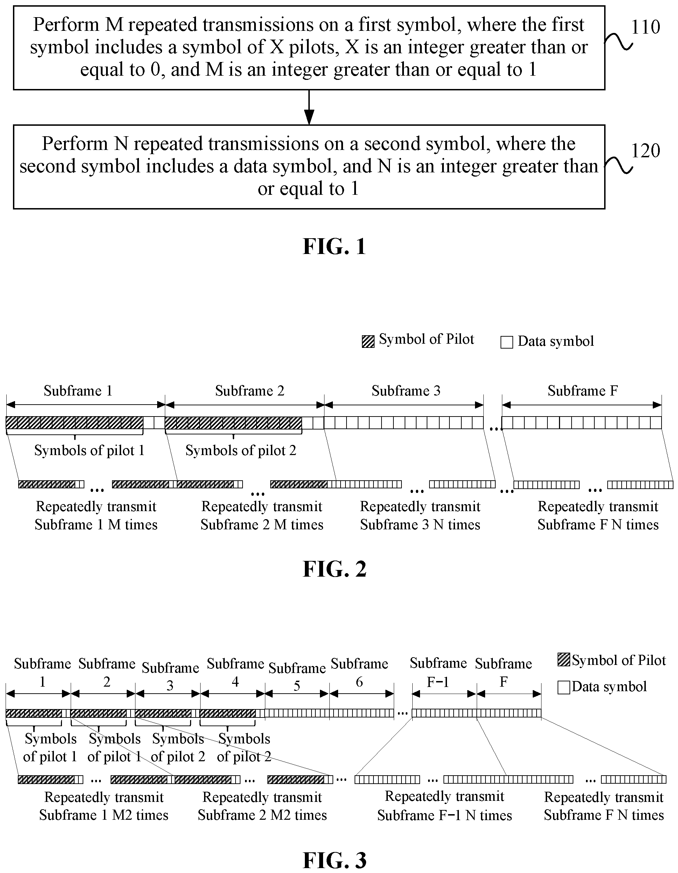

FIG. 1 is a flowchart of a transmission method according to an embodiment of the present application. The embodiment of the present application is applicable to the case of data transmission, and the method may be executed by a transmission apparatus. The apparatus may be implemented through software and/or hardware methods and is generally integrated at a transmitting side. As shown in FIG. 1, the method provided in the embodiment of the present application includes the following.

In 110, M repeated transmissions are performed on a first symbol, where the first symbol includes a symbol of X pilots, X is an integer greater than or equal to 0, and M is an integer greater than or equal to 1.

In 120, N repeated transmissions are performed on a second symbol, where the second symbol includes a data symbol, and N is an integer greater than or equal to 1.

In the embodiment of the present application, the M repeated transmissions are performed on the first symbol including the symbol of X pilots, and the N repeated transmissions are performed on the second symbol including the data symbol, so the accuracy of channel estimation and time-frequency offset estimation can be improved, and more terminal devices are supported to perform data transmission; in this manner, transmission resources can be saved, and the transmission performance and the transmission capacity of the system can be improved.

There are various implementations of the embodiment of the present application, including but not limited to the implementations and examples provided below. It is to be noted that if not in collision, features in the embodiment, the implementations and the examples of the present application may be combined with each other.

In an implementation, the method provided in the embodiment of the present application is applied to a transmitter. The transmitter includes at least a terminal, a user equipment (UE), a base station, a network device or another applicable communication node.

In an implementation, X is equal to 0, the first symbol does not include any symbol, or the first symbol does not exist; the second symbol includes the data symbol, and N repeated transmissions are performed on the second symbol.

In an implementation, X is equal to 1, and the first symbol includes symbols of one pilot, where the symbols of one pilot include A symbols, and A is an integer greater than or equal to 1.

In an implementation, X is larger than 1, for example, X is 2, 3, 4, or the like, and the first symbol includes symbols of multiple pilots, where the symbols of each pilot include B symbols, and B is an integer greater than or equal to 1.

In the implementation, the symbols of the multiple pilots may be time-division multiplexed, that is, the symbols of the multiple pilots use different transmission resources in the time domain; or the symbols of the multiple pilots may be frequency-division multiplexed, that is, the symbols of the multiple pilots use different transmission resources in the frequency domain; or the symbols of the multiple pilots may be time-frequency-division multiplexed, that is, the symbols of the multiple pilots use different transmission resources in the time domain and the frequency domain; or the symbols of the multiple pilots may be code-division multiplexed, that is, the symbols of the multiple pilots are different, or different sequences are used for generating the symbols of the multiple pilots respectively.

In an implementation, the first symbol further includes a part of data symbols, and accordingly, the second symbol includes the remaining data symbol except the part of data symbols.

For example, the data symbol includes a total of S symbols, and S is an integer greater than or equal to 1. The part of data symbols includes Y symbols among the data symbol, and Y is an integer greater than or equal to 1 and less than or equal to S. The remaining data symbol includes the other (S - Y) symbols among the data symbols.

In the implementation, the first symbol includes the symbol of the X pilots and the part of data symbols, and the first symbol is repeatedly transmitted M times; the second symbol includes the remaining data symbol except the part of data symbols, and the second symbol is repeatedly transmitted N times.

In an implementation, X is equal to 0, the first symbol does not include pilot symbols and only includes a part of data symbols, and the first symbol is repeatedly transmitted M times; the second symbol includes the remaining data symbol except the part of data symbols, and the second symbol is repeatedly transmitted N times.

In an implementation, the value of M is larger than the value of N, that is, the number of repeated transmissions performed on the first symbol is larger than the number of repeated transmissions performed on the second symbol.

In an implementation, the value of N is larger than the value of M, that is, the number of repeated transmissions performed on the second symbol is larger than the number of repeated transmissions performed on the first symbol.

In an implementation, the value of N is equal to the value of M, that is, the number of repeated transmissions performed on the first symbol is equal to the number of repeated transmissions performed on the second symbol.

In an implementation, a pilot includes at least one of a pilot sequence, a reference signal, pilot energy or a resource for transmitting the pilot. The symbols of each pilot may be generated according to one or more of the pilot sequence, the reference signal, the pilot energy and the resource for transmitting the pilot.

In an implementation, the data symbol includes symbols generated by encoding and modulating bits to be sent; or the data symbol includes symbols obtained by spreading or mapping the symbols generated after encoding and modulation by using a sequence; or the data symbol is obtained in the following manner: the bits to be sent are encoded to obtain coded bits, then the coded bits are modulated or mapped into a specified sequence, and the specified sequence is used as the data symbol.

In an implementation, the data symbol or the bits to be sent carry at least one of the following information: payload, identification information, information of at least one pilot of the X pilots, sequence information or transmission resource information. One or more of the identification information, the information of at least one pilot of the X pilots, the sequence information and the transmission resource information may be indicated by dedicated bits or implicitly indicated by specified bits.

For example, one or more of the information of at least one pilot of the X pilots, the sequence information and the transmission resource information are implicitly indicated by specified bits in the payload and/or the identification information; or one or more of the identification information, the information of at least one pilot of the X pilots, the sequence information and the transmission resource information are implicitly indicated by specified bits in the payload.

In the implementation, the payload may include service data and a specified message. The identification information is used by a receiver to determine that data received by the receiver is sent by which transmitter.

The sequence information includes information about a sequence used by a transmitter to perform spreading or mapping on symbols or information about a specified sequence used for mapping bits into the specified sequence, and may further include information about a sequence set. This information is used by the receiver to reconstruct symbols sent by the transmitter for interference cancellation.

The information of at least one pilot of the X pilots includes index information or generation information of the at least one pilot of the X pilots, and may further include information about the number X of pilots. This information is used by the receiver to reconstruct symbols of the pilots for interference cancellation on the pilots.

The transmission resource information includes position information about at least one transmission resource used by the transmitter, may further include quantity information about transmission resources used by the transmitter, and may further include information about available transmission resources. The transmission resource information is used by the receiver to determine transmission resources on which the transmitter performs transmission so that detection can be performed on these transmission resources.

In an implementation, the repeated transmission includes a repeated transmission performed in units of a first specified transmission resource or repeated mapping and transmission performed on a second specified transmission resource.

For example, the repeated transmission may include at least one of a subframe-level repeated transmission, a slot-level repeated transmission, a symbol-level repeated transmission, an intra-subframe repeated transmission, a repeated transmission within multiple subframes, a transmission-block repeated transmission, a multi-subframe repeated transmission, a multi-slot repeated transmission or a multi-symbol repeated transmission.

In an implementation, performing M repeated transmissions on the first symbol includes performing M repeated transmissions on the first symbol according to a first specified repeated transmission mode. For example, M repeated transmissions may be performed on the first symbol according to at least one of the subframe-level repeated transmission, the slot-level repeated transmission, the symbol-level repeated transmission, the intra-subframe repeated transmission, the repeated transmission within multiple subframes, the transmission-block repeated transmission, the multi-subframe repeated transmission, the multi-slot repeated transmission or the multi-symbol repeated transmission.

In an implementation, performing M repeated transmissions on the first symbol includes performing M1 repeated transmissions on the first symbol according to a first repeated transmission mode, and then performing M2 repeated transmissions according to a second repeated transmission mode, where M1 and M2 are each an integer greater than or equal to 1, and M = M1*M2.

In the implementation, the repeated transmissions may be performed on the first symbol according to two different repeated transmission modes. M1 repeated transmissions are performed on the first symbol according to the first repeated transmission mode so that the symbols after M1 repeated transmissions are obtained, and then M2 repeated transmissions are performed on the symbols after M1 repeated transmissions according to the second repeated transmission mode, where the product of M1 and M2 is M. The first repeated transmission mode may include at least one of the symbol-level repeated transmission, the slot-level repeated transmission, the intra-subframe repeated transmission, the subframe-level repeated transmission, the repeated transmission within multiple subframes, the transmission-block repeated transmission, the multi-subframe repeated transmission, the multi-slot repeated transmission or the multi-symbol repeated transmission. The second repeated transmission mode may include at least one of the symbol-level repeated transmission, the slot-level repeated transmission, the intra-subframe repeated transmission, the subframe-level repeated transmission, the repeated transmission within multiple subframes, the transmission-block repeated transmission, the multi-subframe repeated transmission, the multi-slot repeated transmission or the multi-symbol repeated transmission.

In an implementation, performing M repeated transmissions on the first symbol includes spreading the first symbol using a sequence of the length of L to obtain a spread symbol, and performing U repeated transmissions on the spread symbol, where L is an integer greater than 1, U is an integer greater than or equal to 1, and M = L*U.

In the implementation, the first symbol is spread by using a sequence of the length of L to obtain a spread symbol, and U repeated transmissions are performed on the spread symbol, where the product of L and U is M. The specific mode of the repeated transmissions is not limited here.

In an implementation, performing M repeated transmissions on the first symbol includes transmitting the first symbol on H transmission resources, where the first symbol is repeatedly transmitted for Q times on each transmission resource of the H transmission resources, where H is an integer greater than or equal to 1, Q is an integer greater than or equal to 1, and M = H*Q.

In the implementation, the first symbol may be transmitted on multiple transmission resources, and the first symbol may be repeatedly transmitted on each transmission resource multiple times, where the product of the number H of transmission resources and the number Q of repeatedly transmitting the first symbol on each transmission resource is M.

In an example implementation, frequency-hopping transmissions of the first symbol may be performed on multiple transmission resources, for example, Q repeated transmissions of the first symbol are performed on a first transmission resource, after hopping to a second transmission resource, Q repeated transmissions of the first symbol are performed on the second transmission resource, then after hopping to a third transmission resource, Q repeated transmissions of the first symbol are performed on the third transmission resource, and so on; frequency-hopping transmissions are performed on the H transmission resources, and the total number M of repeated transmissions performed on the first symbol satisfies that M = H*Q. Multiple times of frequency-hopping may use the same frequency-hopping mode or multiple frequency-hopping modes. For example, the first frequency-hopping may be performed according to a first frequency-hopping mode, the second frequency-hopping may be performed according to a second frequency-hopping mode, the third frequency-hopping may be performed according to the first frequency-hopping mode, the fourth frequency-hopping may be performed according to the second frequency-hopping mode, and so on. In an example, different frequency-hopping modes use different frequency-hopping intervals or different frequency-hopping patterns.

In an implementation, performing M repeated transmissions on the first symbol includes transmitting the first symbol on J transmission resources, and a symbol of at least one pilot of the X pilots is repeatedly transmitted on each transmission resource of the J transmission resources for M times, where J is an integer greater than or equal to 1.

In the implementation, the first symbol may be transmitted on the J transmission resources, and M repeated transmissions for the symbol of the at least one pilot in the first symbol may be performed on each transmission resource. It is to be understood that the symbols of different pilots may be transmitted on different transmission resources.

In an example implementation, the value of J may be the same as the value of X, the first symbol may be transmitted on the J transmission resources, where J = X, and M repeated transmissions for the symbols of one pilot of the X pilots included in the first symbol may be performed on each transmission resource. It is to be understood that the symbols of one pilot may use one transmission resource, and the symbols of the X pilots may be transmitted on different transmission resources.

In an example implementation, frequency-hopping transmissions of the first symbol may be performed on J transmission resources, and multiple times of frequency-hopping may use one or more frequency-hopping modes. The example where J = X is used here. M repeated transmissions for the symbols of the first pilot in the first symbol may be performed on the first transmission resource, after hopping to the second transmission resource, M repeated transmissions for the symbols of the second pilot in the first symbol are performed on the second transmission resource, then after hopping to the third transmission resource, M repeated transmissions for the symbols of the third pilot in the first symbol are performed on the third transmission resource, and so on; finally, after hopping to an $X^{th}$ transmission resource, M repeated transmissions for the symbols of an $X^{th}$ pilot in the first symbol are performed on the $X^{th}$ transmission resource.

In an example implementation, M repeated transmissions for the part of data symbols included in the first symbol are further performed on J transmission resources. Data symbols transmitted on different transmission resources may be different.

In an implementation, performing N repeated transmissions on the second symbol includes performing N repeated transmissions on the second symbol according to a second specified repeated transmission mode. For example, N repeated transmissions may be performed on the second symbol according to at least one of the subframe-level repeated transmission, the slot-level repeated transmission, the symbol-level repeated transmission, the intra-subframe repeated transmission, the repeated transmission within multiple subframes, the transmission-block repeated transmission, the multi-subframe repeated transmission, the multi-slot repeated transmission or the multi-symbol repeated transmission.

In an implementation, performing N repeated transmissions on the second symbol includes performing N1 repeated transmissions on the second symbol according to a third repeated transmission mode, and then performing N2 repeated transmissions according to a fourth repeated transmission mode, where N1 and N2 are each an integer greater than or equal to 1, and

$$N = N1 * N2.$$

In the implementation, repeated transmissions for the second symbol may be performed according to two different repeated transmission modes. N1 repeated transmissions are performed on the second symbol according to the third repeated transmission mode so that the symbols after the N1 repeated transmissions are obtained, and then N2 repeated transmissions are performed on the symbols obtained after the N1 repeated transmissions according to the fourth repeated transmission mode, where the product of N1 and N2 is N. The third repeated transmission mode and the fourth repeated transmission mode are not limited here. In an example, the third repeated transmission mode is the same as the first repeated transmission mode, and the fourth repeated transmission mode is the same as the second repeated transmission mode.

In an implementation, performing N repeated transmissions on the second symbol includes spreading the second symbol by using a sequence of the length of G to obtain a spread symbol, and performing R repeated transmissions on the spread symbol, where G is an integer greater than 1, R is an integer greater than or equal to 1, and N = G*R.

In the implementation, the second symbol is spread by using a sequence of the length of G to obtain a spread symbol, and R repeated transmissions are performed on the spread symbol, where the product of G and R is N. The specific mode of the repeated transmissions is not limited here. In an example, the value of G is equal to the value of L.

In an implementation, performing N repeated transmissions on the second symbol includes transmitting the second symbol on P transmission resources, where T repeated transmissions of the second symbol are performed on each transmission resource of the P transmission resources, P is an integer greater than or equal to 1, T is an integer greater than or equal to 1, and N = P*T.

In the implementation, the second symbol may be transmitted on multiple transmission resources, and multiple repeated transmissions of the second symbol may be performed on each transmission resource, where the product of the number P of transmission resources and the number T of repeated transmissions of the second symbol performed on each transmission resource is N. In an example, the value of P is equal to the value of H.

In an example implementation, frequency-hopping transmissions of the second symbol may be performed on multiple transmission resources, for example, T repeated transmissions for the second symbol are performed on the first transmission resource, after hopping to the second transmission resource, T repeated transmissions for the second symbol are performed on the second transmission resource, then after hopping to a third transmission resource, T repeated transmissions for the second symbol are performed on the third transmission resource, and so on; frequency-hopping transmissions are performed on P transmission resources, and the total number N of repeated transmissions performed on the second symbol satisfies that N = P*T. Multiple times of frequency-hopping may use the same frequency-hopping mode or multiple frequency-hopping modes. For example, the first frequency-hopping may be performed according to a first frequency-hopping mode, the second frequency-hopping may be performed according to a second frequency-hopping mode, the third frequency-hopping may be performed according to the first frequency-hopping mode, the fourth frequency-hopping may be performed according to the second frequency-hopping mode, and so on. In an example, different frequency-hopping modes use different frequency-hopping intervals or different frequency-hopping patterns.

In an implementation, performing N repeated transmissions on the second symbol includes transmitting the second symbol on V transmission resources, where the second symbol includes W sets of data symbols, and at least one set of data symbols among the W sets of data symbols are repeatedly transmitted on each transmission resource of the V transmission resources for N times, where V is an integer greater than or equal to 1, and W is an integer greater than or equal to 1.

In the implementation, the second symbol may be transmitted on the V transmission resources, the data symbols included in the second symbol may be divided into W sets of data symbols, each set of data symbols includes one or more data symbols, and N repeated transmissions of at least one set of data symbols may be performed on each transmission resource. It is to be understood that different sets of data symbols may be transmitted on different transmission resources.

In an example implementation, the value of V may be the same as the value of W, the second symbol may be transmitted on V transmission resources, where V = W, and N repeated transmissions for one set of data symbols of the W sets of data symbols may be performed on each transmission resource. It is to be understood that one set of data symbols may use one transmission resource, and the W sets of data symbols may be transmitted on different transmission resources.

In an example implementation, frequency-hopping transmissions of the second symbol may be performed on V transmission resources, and multiple times of frequency-hopping may use one or more hopping modes. The example where V = W is used here. N repeated transmissions for the first set of the W sets of data symbols may be performed on the first transmission resource, after hopping to the second transmission resource, N repeated transmissions for the second set of the W sets of data symbols are performed on the second transmission resource, then after hopping to the third transmission resource, N repeated transmissions for the third set of the W sets of data symbols are performed on the third transmission resource, and so on; finally after hopping to a $W^{th}$ transmission resource, M repeated transmissions for a $W^{th}$ set of the W sets of data symbols are performed on the $W^{th}$ transmission resource.

In an implementation, the method provided in the embodiment of the present application may be applied to weak coverage scenarios, severe coverage scenarios or extreme coverage scenarios, and may be applied to enhance coverage; the method may further be applied to grant-free transmission, including the grant-free transmission in scenarios such as weak coverage scenarios, severe coverage scenarios or extreme coverage scenarios.

The method and various implementations provided in the embodiment of the present application can improve the channel estimation result and the time-frequency offset estimation result of weak coverage UEs, enhance the transmission performance of weak coverage UEs, save transmission resources, and improve the transmission performance and the transmission capacity of the system. When the method is applied to the grant-free transmission, more weak coverage UEs can be supported for performing grant-free transmission, and further more UEs can be supported for performing grant-free access and transmission, so the performance and the capacity of grant-free transmission system are improved.

FIG. 2 is an example diagram of a transmission method according to an embodiment of the present application. As shown in FIG. 2, in the example, when repeated transmissions are not performed, a resource unit of the transmitter for data transmission includes F subframes. The transmitter uses two pilots, with pilot 1 located on subframe 1 and pilot 2 located on subframe 2. Symbols except symbols of the two pilots are data symbols used for transmitting data such as payload or service data. In the example, the transmitter may be a terminal or a UE.

To ensure the transmission performance of weak coverage or poor coverage UEs, the transmitter adopts the subframe-level repeated transmission, performing M repeated transmissions on the subframes where the two pilots are located and N repeated transmissions on the other subframes. That is, the transmitter performs M repeated transmissions on subframe 1 and subframe 2 separately and N repeated transmissions on subframe 3 to subframe F separately.

In the example, subframe 1 includes symbols of pilot 1 and two data symbols, and subframe 2 includes symbols of pilot 2 and two data symbols. In another case of the example, subframe 1 may only include the symbols of pilot 1, and subframe 2 may only include the symbols of pilot 2. In another case of the example, when the transmitter performs data transmission, the transmitter may only send data without carrying the symbols of the pilot. Therefore, subframe 1 and subframe 2 may only include data symbols, and the transmitter performs M repeated transmissions on subframe 1 and subframe 2 separately and N repeated transmissions on the other subframes separately.

In the example, pilot 1 includes 12 symbols; thus, pilot 1 may be a sequence of the length of 12, and the symbols of pilot 1 may be generated according to this sequence. Similarly, pilot 2 may be a sequence of the length of 12. Then, more UEs can be supported through the two pilots for performing shared access and transmission. For example, a candidate pilot set for pilot 1 and a candidate pilot set for pilot 2 both include twelve orthogonal sequences with the length of 12 or quasi-orthogonal sequences with the length of 12. Multiple UEs perform contention-based grant-free access, and each UE randomly selects one sequence from the candidate pilot set as pilot 1 and one sequence from the candidate pilot set as pilot 2. Therefore, the probability that multiple UEs collide on pilot 1 and pilot 2 simultaneously is very low. Alternatively, multiple UEs perform configured grant access, and each UE determines one sequence from the candidate pilot set as pilot 1 and one sequence from the candidate pilot set as pilot 2. Moreover, at least one of pilot 1 and pilot 2 for any two UEs may be set to be different. Then, the receiver performs channel estimation, user identification and multi-user detection according to pilot 1 and/or pilot 2, thereby acquiring better grant-free transmission performance.

In another case of the example, pilot 1 and pilot 2 may each include one symbol, two symbols or another number of symbols to support one or more UEs for shared access and transmission. In another case of the example, the symbols of pilot 1 and the symbols of pilot 2 may be located on other subframes. In another case of the example, the symbols of pilot 1 and the symbols of pilot 2 may both be discontinuous. In another case of the example, the sequence used by pilot 1 and the sequence used by pilot 2 may be an all-1 sequence, or come from an orthogonal sequence set, a quasi-orthogonal sequence set or a non-orthogonal sequence set.

In the example, when M is larger than N. For example, M = 16, and N = 8; or M = 32, and N = 16; and so on. In this case, the symbols of the pilot are repeated for more times, so better frequency offset estimation result and better channel estimation result can be acquired when the receiver performs detection, thus the transmission performance of UEs can be improved, and the performance and the capacity of the system can be improved.

In another case, M is equal to N. For example, M = 8, and N = 8; or M = 16, and N = 16; and so on. In this case, the two pilots used by the transmitter may be used for channel estimation, frequency offset estimation and user detection separately, or jointly used for channel estimation, frequency offset estimation and user detection, which is conducive to supporting more UEs for shared access and transmission.

In another case, M is smaller than N. For example, M = 8, and N = 16; or M = 16, and N = 32; and so on. This case may be used in scenarios where the system frequency offset is relatively small, the channel variation is relatively small, the channel estimation performance already meets the requirements, and the transmission performance of a part of data symbols can be ensured. Therefore, a smaller M is used, so transmission resources can be saved; or the saved transmission resources are used for data transmission, so the code rate of data transmission can be reduced; in this manner, the performance and the capacity of the system can be improved.

FIG. 3 is an example diagram of another transmission method according to an embodiment of the present application. As shown in FIG. 3, in the example, symbols of pilot 1 are repeated on subframe 1 and subframe 2, and symbols of pilot 2 are repeated on subframe 3 and subframe 4. Symbols except symbols of the two pilots are data symbols used for transmitting data, such as payload or service data.

To ensure the transmission performance of weak coverage or poor coverage UEs, the transmitter adopts the subframe-level repeated transmission to perform M2 repeated transmissions on the subframes where the two pilots are located and N repeated transmissions on the other subframes. That is, the transmitter performs M2 repeated transmissions on subframe 1 to subframe 4 separately and N repeated transmissions on subframe 5 to subframe F separately.

In the example, subframe 1 and subframe 2 each include the symbols of pilot 1 and two data symbols, and subframe 3 and subframe 4 each include the symbols of pilot 2 and two data symbols. In another case of the example, subframe 1 and subframe 2 may only include the symbols of pilot 1, and subframe 3 and subframe 4 may only include the symbols of pilot 2. In another case of the example, when the transmitter performs data transmission, the transmitter may only send data without carrying the symbols of the pilot. Therefore, subframe 1 to subframe 4 may only include data symbols, and the transmitter performs M2 repeated transmissions on subframe 1 to subframe 4 separately and N repeated transmissions on the other subframes separately. In the example, other characteristics of pilot 1 and pilot 2 are as described above and are not repeated here.

In the example, in a case, for example, M2 = N = 8, or M2 = N = 16, and so on. Since M1 repeated transmissions of pilot 1 on subframe 1 and subframe 2 are performed, where M1 = 2, and M1 repeated transmissions of pilot 2 on subframe 3 and subframe 4 are performed, where M1 = 2, the actual number of repeated transmissions performed on the symbols of the pilot is equal to M1*M2 = 2*M2, which is more than the number of repeated transmissions performed on data symbols. The symbols of the pilot are repeated more times, so a better frequency offset estimation result and a better channel estimation result can be acquired when the receiver performs detection, thus the transmission performance of UEs can be improved, and the performance and the capacity of the system can be improved.

In another case, for example, M2 = 8, and N = 16; or M2 = 16, and N = 32; and so on. In this case, the actual number of repeated transmissions performed on the symbols of the pilot is the same as the number of repeated transmissions performed on data symbols. The two pilots used by the transmitter may be used for channel estimation, frequency offset estimation and user detection separately, or jointly used for channel estimation, frequency offset estimation and user detection, which is conducive to supporting more UEs by the system for shared access and transmission.

In another case, for example, M2 = 4, and N = 16; or M2 = 8, and N = 32; and so on. In this case, the actual number of repeated transmissions performed on the symbols of the pilot is less than the number of repeated transmissions performed on the data symbols. This case may be used in scenarios where the system frequency offset is relatively small, the channel estimation performance already meets the requirements, and the transmission performance of a part of data symbols can be ensured. Therefore, a smaller M2 is used, so transmission resources can be saved; or the saved transmission resources are used for data transmission, so the code rate of data transmission can be reduced; in this manner, the performance and the capacity of the system can be improved.

Differences between this example and the example shown in FIG. 2 include as follows: (1) subframe 3 to subframe F in the example shown in FIG. 2 are used for data transmission, while subframe 5 to subframe F in this example are used for data transmission; (2) the number of repeated transmissions performed on the data symbols on subframe 1 and subframe 2 in the example shown in FIG. 2 is M, while the number of repeated transmissions performed on the data symbols on subframe 1 to subframe 4 in this example is M2.

In another case of the example, the two data symbols of subframe 1 may be the same as the two data symbols of subframe 2, which means that similar to the symbols of pilot 1, the two data symbols are repeated on subframe 1 and subframe 2. Therefore, the actual number of repeated transmissions performed on these two data symbols is 2*M2. Similarly, the two data symbols on subframe 3 and the two data symbols on subframe 4 can be processed in a similar manner.

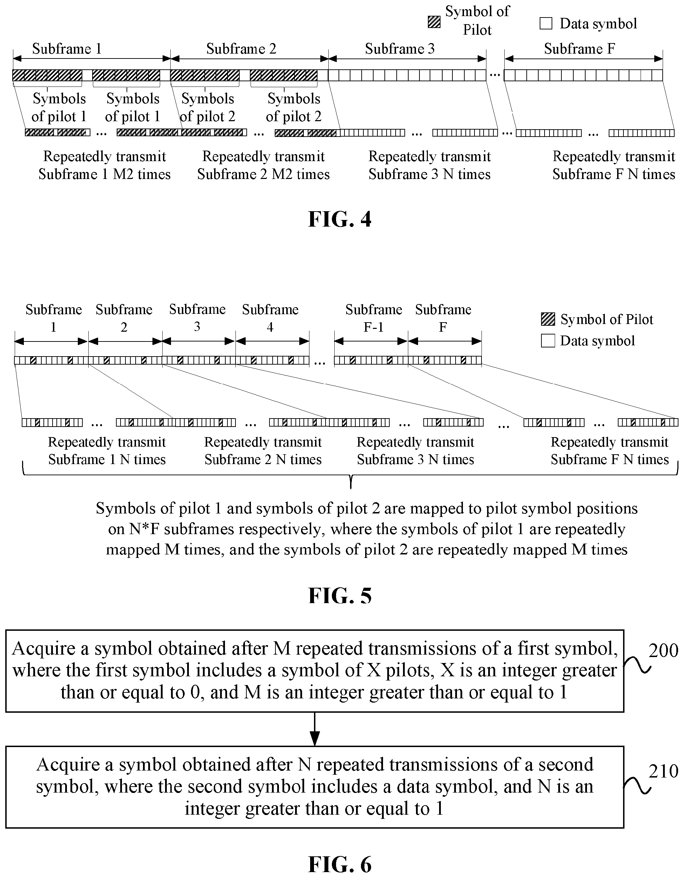

FIG. 4 is an example diagram of another transmission method according to an embodiment of the present application. As shown in FIG. 4, in the example, it is assumed that one subframe includes two slots. Symbols of pilot 1 are repeated on two slots of subframe 1, and symbols of pilot 2 are repeated on two slots of subframe 2. Other symbols except the symbols of the two pilots are data symbols used for transmitting data such as payload or service data.

To ensure the transmission performance of weak coverage or poor coverage UEs, the transmitter adopts the subframe-level repeated transmission to perform M2 repeated transmissions on the subframes where the two pilots are located and N repeated transmissions on the other subframes. That is, the transmitter performs M2 repeated transmissions on subframe 1 and subframe 2 separately and N repeated transmissions on subframe 3 to subframe F separately.

It can be seen that the difference between this example and the example shown in FIG. 3 is that in the example shown in FIG. 3, the number of symbols of pilot 1 and the number of symbol of pilot 2 are relatively large or the length of symbols of pilot 1 and the length of symbols of pilot 2 are relatively long, and pilot 1 and pilot 2 are first repeated on M1 subframes, where M1 = 2, and then M2 subframe-level repeated transmissions are performed on pilot 1 and pilot 2; in this example, the number of symbols of pilot 1 and the number of symbols of pilot 2 are relatively small or the length of symbols of pilot 1 and the length of symbols of pilot 2 are relatively short, and pilot 1 and pilot 2 are first repeated on M1 slots, where M1 = 2, and then M2 subframe-level repeated transmissions are performed on pilot 1 and pilot 2.

FIG. 5 is an example diagram of another transmission method according to an embodiment of the present application. As shown in FIG. 5, in the example, each subframe includes two pilot symbols, and the other symbols are data symbols. To ensure the transmission performance of weak coverage or poor coverage UEs, the transmitter adopts the subframe-level repeated transmission to perform N repeated transmissions on subframe 1 to subframe F. Then, the transmitter maps the symbols of pilot 1 and the symbols of pilot 2 to pilot symbol positions on N*F subframes after the repetitions, where the symbols of pilot 1 are repeatedly mapped M times and the symbols of pilot 2 are repeatedly mapped M times.

It is assumed that the indexes of N*F subframes after the repetitions are 1, 2, ... and N*F. In this example, in a case, the symbols of pilot 1 are repeatedly mapped to pilot symbol positions on subframe 1 to subframe F/4, pilot symbol positions on subframe F/2 + 1 to subframe 3*F/4, ... and pilot symbol positions on subframe (N - 1/2)*F + 1 to subframe (N - 1/4)*F; thus, the symbols of pilot 1 are repeatedly mapped M times totally, where M = 2*N, which means that the symbols of pilot 1 are repeatedly transmitted M times, where M = 2*N. The symbols of pilot 2 are repeatedly mapped to pilot symbol positions on subframe F/4 + 1 to subframe F/2, pilot symbol positions on subframe 3*F/4 + 1 to subframe F, ... and pilot symbol positions on subframe (N - 1/4)*F + 1 to subframe N*F; thus, the symbols of pilot 2 are repeatedly mapped M times totally, where M = 2*N, which means that the symbols of pilot 2 are repeatedly transmitted M times, where M = 2*N. In this case, pilot 1 and pilot 2 are repeated relatively more times, so a better frequency offset estimation result and a better channel estimation result can be acquired when the receiver performs detection, thus the transmission performance of UEs can be improved, and the performance and the capacity of the system can be improved.

In another case, the symbols of pilot 1 are repeatedly mapped to pilot symbol positions on subframe 1 to subframe F, pilot symbol positions on subframe 2F + 1 to subframe 3F, ... and pilot symbol positions on subframe (N - 2)*F + 1 to subframe (N - 1)*F; thus, and the symbols of pilot 1 are repeatedly mapped M times totally, where M = N/2, which means that the symbols of pilot 1 are repeatedly transmitted M times, where M = N/2. The symbols of pilot 2 are repeatedly mapped to pilot symbol positions on subframe F + 1 to subframe 2F, pilot symbol positions on subframe 3F + 1 to subframe 4F, ... and pilot symbol positions on subframe (N - 1)*F + 1 to subframe N*F; thus, the symbols of pilot 2 are repeatedly mapped M times totally, where M = N/2, which means that the symbols of pilot 2 are repeatedly transmitted M times, where M = N/2. It is assumed that N is an even number here. In this case, pilot 1 and pilot 2 are repeated fewer times, so this case can be applied to scenarios where the system frequency offset is relatively small and the channel variation is relatively small. Moreover, the length of pilot 1 and the length of pilot 2 are each 2F, that is, pilot 1 and pilot 2 are relatively long, so more UEs can be supported for shared access and transmission.

In another case, the symbols of pilot 1 are repeatedly mapped to pilot symbol positions on subframe 1 to subframe F/2, pilot symbol positions on subframe F + 1 to subframe 3*F/2, ... and pilot symbol positions on subframe (N - 1)*F + 1 to subframe (N - 1/2)*F; thus, the symbols of pilot 1 are repeatedly mapped M times totally, where M = N, which means that the symbols of pilot 1 are repeatedly transmitted M times, where M = N. The symbols of pilot 2 are repeatedly mapped to pilot symbol positions on subframe F/2 + 1 to subframe F, pilot symbol positions on subframe 3*F/2 + 1 to subframe 2*F, ... and pilot symbol positions on subframe (N - 1/2)*F + 1 to subframe N*F; thus, the symbols of pilot 2 are repeatedly mapped M times totally, where M = N, which means that the symbols of pilot 2 are repeatedly transmitted M times, where M = N. In this case, the lengths and the number of repetitions of pilot 1 and pilot 2 are moderate, so moderate frequency offset estimation and channel estimation performance can be achieved, and a moderate number of access users can be supported.

In the preceding examples of the present application, the two pilots used by the transmitter are time-division multiplexed. In other examples of the present application, the two pilots used by the transmitter may be code-division multiplexed, frequency-division multiplexed, or time-frequency-division multiplexed. On this basis, various implementations similar to the preceding examples can be implemented, which is not repeated here.

In the preceding examples of the present application, the transmitter mainly uses the subframe-level repeated transmission. In other examples of the present application, the transmitter may use other repeated transmission methods, such as the slot-level repeated transmission, the symbol-level repeated transmission, the transmission-block repeated transmission, the multi-subframe repeated transmission, the multi-slot repeated transmission, or the multi-symbol repeated transmission.

In the preceding examples of the present application, the transmission resources used by the transmitter may include one or more subcarriers, one or more carriers, one or more resource blocks, one or more resource units, or the like. When the transmission resources used by the transmitter include multiple resources in the frequency domain, such as multiple subcarriers, the receiver may also perform time offset estimation according to the received symbols of pilots and/or data symbols to improve detection performance.

In the preceding examples of the present application, when performing repeated transmissions on the symbols of pilot 1, the symbols of pilot 2 and the data symbols, the transmitter may further use frequency-hopping transmissions as described in the embodiment and implementations of the present application. According to repeatedly transmitted symbols after the frequency-hopping transmissions, the receiver may perform time offset estimation and frequency offset estimation to improve the detection performance.

In the preceding examples of the present application, when performing N repeated transmissions on the data symbols, the transmitter may also perform N1 repeated transmissions according to one repeated transmission mode and then perform N2 repeated transmissions according to another repeated transmission mode, and N = N1 *N2.

In the preceding examples of the present application, the transmitter performs N repeated transmissions on the data symbols, which can be achieved through a combination of spread and repetition. For example, the transmitter uses a sequence of the length of G to spread the data symbols to obtain the spread symbols, and then performs R repeated transmissions on the spread symbols, where N = G*R.

In the preceding examples of the present application, the transmitter uses two pilots to support more UEs for shared access and transmission. In another example of the present application, the transmitter may use three pilots to further support more UEs for shared access and transmission. On this basis, various implementations similar to the preceding examples can be implemented. In another example of the present application, the transmitter may use one pilot to support one or more UEs for shared access and transmission. On this basis, various implementations similar to the preceding examples can be implemented.

The preceding examples of the present application may support K transmitters to perform share access and transmission on the same transmission resource, where K is an integer greater than 1, and each transmitter performs transmission according to the method described in the preceding examples. For example, each transmitter generates symbols of pilot 1, symbols of pilot 2 and data symbols of itself, then combines the symbols of pilot 1, the symbols of pilot 2 and the data symbols into subframes, and performs repeated transmissions according to the preceding examples. Alternatively, each transmitter combines the data symbols into subframes and performs repeated transmissions on the subframes, and the symbols of pilot 1 and the symbols of pilot 2 are repeatedly mapped on the subframes after the repetitions. In an example, K transmitters may be K terminals or K UEs.

The preceding examples in the present application may be applied to grant-free transmission. M repeated transmissions are performed on the symbols of two pilots separately and N repeated transmissions are performed on the data symbols, so the time-frequency offset estimation result and the channel estimation result of weak coverage UEs can be improved, the coverage level of weak coverage UEs can be enhanced, the transmission performance of weak coverage UEs can be improved, and thus more weak coverage UEs are supported for grant-free transmission; moreover, transmission resources can be saved or the code rate of data transmission can be reduced, so the transmission performance and the capacity of the system can be improved. Therefore, the method provided in the preceding examples of the present application can support more UEs for grant-free enhanced coverage access and transmission, and the performance and the capacity of the grant-free transmission system can be improved.

FIG. 6 is a flowchart of another transmission method according to an embodiment of the present application. The embodiment of the present application is applicable to the case of data transmission, and the method may be executed by a transmission apparatus. The apparatus may be implemented through software and/or hardware methods and is generally integrated at a receiving side. As shown in FIG. 6, the method provided in the embodiment of the present application includes the following.

In 200, a symbol obtained after M repeated transmissions of a first symbol is acquired, where the first symbol includes a symbol of X pilots, X is an integer greater than or equal to 0, and M is an integer greater than or equal to 1.

In 210, a symbol obtained after N repeated transmissions of a second symbol is acquired, where the second symbol includes a data symbol, and N is an integer greater than or equal to 1.

In the embodiment of the present application, the symbols obtained after the M repeated transmissions of the first symbol and the symbols obtained after the N repeated transmissions of the second symbol are acquired, so the accuracy of channel estimation and time-frequency offset estimation can be improved, and more terminal devices are supported to perform data transmission; in this manner, transmission resources can be saved, and the transmission performance and the transmission capacity of the system can be improved.

There are various implementations of the embodiment of the present application, including but not limited to the implementations and examples provided below. It is to be noted that if not in collision, features in the embodiment, the implementations and the examples of the present application may be combined with each other.

In an implementation, the method provided in the embodiment of the present application is applied to a receiver. The receiver includes at least a base station, a network device, a terminal, a UE or another applicable communication node.

In an implementation, X is equal to 0, the first symbol does not include any symbol, or the first symbol does not exist; and the second symbol includes the data symbol.

In an implementation, X is equal to 1, and the first symbol includes symbols of one pilot, where the symbols of one pilot include A symbols, and A is an integer greater than or equal to 1.

In an implementation, X is larger than 1, for example, X is 2, 3, 4, or another value, and the first symbol includes symbols of multiple pilots, where symbols of each pilot include B symbols, and B is an integer greater than or equal to 1.

In an implementation, the first symbol further includes a part of data symbols, and accordingly, the second symbol includes the remaining data symbol except the part of data symbols.

For example, the data symbols include a total of S symbols, and S is an integer greater than or equal to 1. The part of data symbols include Y symbols of the data symbols, and Y is an integer greater than or equal to 1 and smaller than or equal to S. The remaining data symbol includes the remaining (S - Y) symbols of the data symbols.

In the implementation, the first symbol includes the symbol of X pilots and the part of data symbols, and the second symbol includes the remaining data symbol except the part of data symbols.

In an implementation, X is equal to 0, and the first symbol does not include pilot symbols and only includes a part of data symbols, and the second symbol includes the remaining data symbol except the part of data symbols.

In an implementation, the value of M is larger than the value of N.

In an implementation, the value of N is larger than the value of M.

In an implementation, the value of N is equal to the value of M.

It is to be understood that technical features of the first symbol and the M repeated transmissions of the first symbol and technical features of the second symbol and the N repeated transmissions of the second symbol in the embodiment are the same as the technical features in the embodiment shown in FIG. 1.

In an implementation, the method provided in the embodiment of the present application further includes performing detection on the symbols obtained after the M repeated transmissions of the first symbol and the symbols obtained after the N repeated transmissions of the second symbol to acquire a detection result of the data symbols.

In the implementation, the method provided in the embodiment of the present application may perform specified processing according to the symbols obtained after the M repeated transmissions of the symbols of at least one pilot in the first symbol to acquire a processing result, where the specified processing includes at least one of channel estimation, frequency offset estimation, time offset estimation or user identification, and then perform detection on the symbols obtained after the N repeated transmissions of the second symbol according to the acquired processing result to acquire the detection result of the data symbols.

In an example, the method provided in the embodiment of the present application performs detection on the data symbol included in the second symbol according to the acquired processing result to acquire the detection result of the data symbols.

In an example, the method provided in the embodiment of the present application performs detection on the data symbols included in the first symbol and the second symbol according to the acquired processing result to acquire the detection result of the data symbols.

In an example, the method provided in the embodiment of the present application may perform the preceding specified processing according to a part of repeatedly-transmitted symbols among the symbols obtained after the M repeated transmissions of the first symbol for detection.

In an implementation, the method provided in the embodiment of the present application performs, according to a preset frequency offset compensation value, frequency offset compensation on the symbols obtained after the M repeated transmissions of the first symbol and the symbols obtained after the N repeated transmissions of the second symbol.

In an implementation, the method provided in the embodiment of the present application performs, according to a preset time offset compensation value, time offset compensation on the symbols obtained after the M repeated transmissions of the first symbol and the symbols obtained after the N repeated transmissions of the second symbol.

In an implementation, the method provided in the embodiment of the present application acquires, according to the acquired detection result of the data symbol, at least one piece of the following information: payload, identification information, information of at least one pilot of the X pilots, sequence information, or transmission resource information.

In an implementation, the method provided in the embodiment of the present application performs demodulation and decoding on the acquired detection result of the data symbols to acquire a decoding result.

In an example, the method provided in the embodiment of the present application determines whether the acquired decoding result is correct according to a cyclic redundancy check result. For example, if a transmitter adopts a contention-based grant-free transmission manner, the receiver does not know which UEs perform transmission. After decoding, the receiver can determine whether the acquired decoding result is correct according to the cyclic redundancy check result and other available information, and acquire information from the decoding result.

In an example, the method provided in the embodiment of the present application acquires, from the acquired decoding result, at least one of payload, identification information, information of at least one pilot of the X pilots, sequence information, or transmission resource information. One or more of the identification information, the information of at least one pilot of the X pilots, the sequence information and the transmission resource information may be indicated by dedicated bits or implicitly indicated by specified bits.

In an example, the method provided in the embodiment of the present application can acquire payload and identification information from the acquired decoding result, and then acquire, from the payload and/or the identification information, one or more of information of at least one pilot of the X pilots, sequence information and transmission resource information.

In an example, the method provided in the embodiment of the present application can acquire payload from the acquired decoding result, and then acquire, from the payload, one or more of identification information, information of at least one pilot of the X pilots, sequence information and transmission resource information.

In the preceding example, the payload includes service data and a specified message. The identification information is used by a receiver to determine that the data received by the receiver is sent by which transmitter.

The sequence information includes information of a sequence used by a transmitter to spread or map symbols or information of a specified sequence used for mapping bits into a specified sequence, and may further include information of a sequence set. The receiver may reconstruct the symbols sent by the transmitter according to the sequence information for interference cancellation.

The information of at least one pilot of the X pilots includes index information or generation information of the at least one pilot of the X pilots, and may further include information about the number X of pilots. The receiving side may reconstruct symbols of the pilot according to the information of at least one pilot of the X pilots for interference cancellation on the pilots.

The transmission resource information includes position information about at least one transmission resource used by the transmitter, may further include quantity information about the transmission resource used by the transmitter, and may further include information about available transmission resources. The receiver may determine, according to the transmission resource information, on which transmission resources the transmitter performs transmission to further detect these transmission resources.

In an implementation, the method provided in the embodiment of the present application reconstructs, according to the acquired detection result or the acquired decoding result, the symbols of the M repeated transmissions performed on the first symbol and the symbols of the N repeated transmissions performed on the second symbol, and performs interference cancellation to acquire an interference cancellation result. Then, the method provided in the embodiment of the present application performs the next detection according to the interference cancellation result. The receiver may perform iterative detection multiple times and stop the detection process until a specified condition is satisfied.

In an implementation, the method provided in the embodiment of the present application may be applied to weak coverage scenarios, severe coverage scenarios or extreme coverage scenarios, and can be used to enhance the coverage; the method may further be applied to grant-free transmission, including grant-free transmission in scenarios such as weak coverage scenarios, severe coverage scenarios or extreme coverage scenarios.

The method and various implementations provided in the embodiment of the present application can improve the channel estimation result and the time-frequency offset estimation result of weak coverage UEs, enhance the transmission performance of weak coverage UEs, save transmission resources, and improve the transmission performance and the transmission capacity of the system. When the method is applied to grant-free transmission, more weak coverage UEs can be supported for performing the grant-free transmission, further more UEs can be supported for performing the grant-free access and transmission, so the performance and the capacity of the grant-free transmission system are improved.

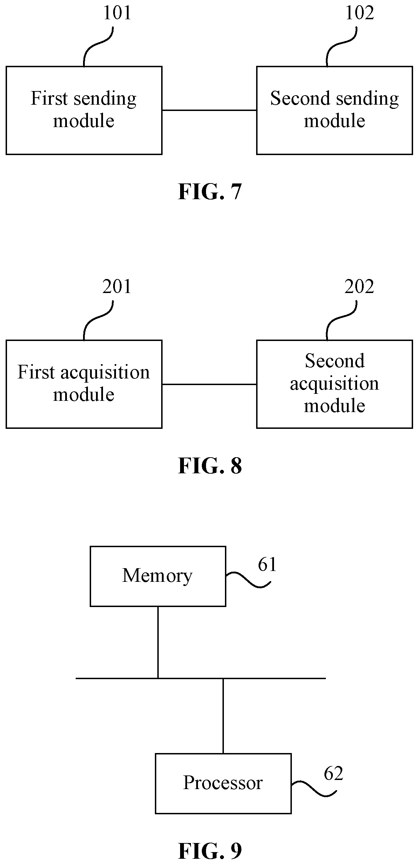

FIG. 7 is a structural diagram of a transmission apparatus according to an embodiment of the present application. The apparatus can perform the transmission method provided in any embodiment of the present application, and has function modules and beneficial effects corresponding to the method performed. The apparatus may be implemented by software and/or hardware. As shown in FIG. 7, the apparatus provided in the embodiment of the present application includes a first sending module 101 and a second sending module 102.

The first sending module 101 is configured to perform M repeated transmissions on a first symbol, where the first symbol includes a symbol of X pilots, X is an integer greater than or equal to 0, and M is an integer greater than or equal to 1.

The second sending module 102 is configured to perform N repeated transmissions on a second symbol, where the second symbol includes a data symbol, and N is an integer greater than or equal to 1.

In the embodiment of the present application, the first sending module 101 performs the M repeated transmissions on the first symbol including the symbol of X pilots, and the second sending module 102 performs the N repeated transmissions on the second symbol including the data symbol, so the accuracy of channel estimation and time-frequency offset estimation can be improved, and more terminal devices are supported to perform data transmission; in this manner, transmission resources can be saved, and the transmission performance and the transmission capacity of the system can be improved.

In an implementation, the first symbol in the apparatus further includes a part of data symbols, and accordingly, the second symbol in the apparatus includes the remaining data symbol except the part of data symbols.

In an implementation, in the apparatus, the value of M is larger than the value of N.

In an implementation, in the apparatus, the value of N is larger than the value of M.

In an implementation, the first sending module 101 in the apparatus is configured to perform M1 repeated transmissions on the first symbol according to a first repeated transmission mode, and then perform M2 repeated transmissions according to a second repeated transmission mode, where M1 and M2 are each an integer greater than or equal to 1, and M = M1*M2.

In an implementation, the first sending module 101 in the apparatus is configured to spread the first symbol using a sequence of the length of L to obtain a spread symbol, and perform U repeated transmissions on the spread symbol, where L is an integer greater than 1, U is an integer greater than or equal to 1, and M = L * U.

In an implementation, the first sending module 101 in the apparatus is configured to transmit the first symbol on H transmission resources, where Q repeated transmissions of the first symbol are performed on each transmission resource of the H transmission resources, where H is an integer greater than or equal to 1, Q is an integer greater than or equal to 1, and M = H*Q.

In an implementation, the first sending module 101 in the apparatus is configured to transmit the first symbol on J transmission resources, where M repeated transmissions of a symbol of at least one pilot of the X pilots are performed on each transmission resource of the J transmission resources, where J is an integer greater than or equal to 1.

In an implementation, the second sending module 102 in the apparatus is configured to perform N1 repeated transmissions on the second symbol according to a third repeated transmission mode, and then perform N2 repeated transmissions according to a fourth repeated transmission mode, where N1 and N2 are each an integer greater than or equal to 1, and N = N1 *N2.

In an implementation, the second sending module 102 in the apparatus is configured to spread the second symbol using a sequence of the length of G to obtain a spread symbol, and perform R repeated transmissions on the spread symbol, where G is an integer greater than 1, R is an integer greater than or equal to 1, and N = G*R.

In an implementation, the second sending module 102 in the apparatus is configured to transmit the second symbol on P transmission resources, where T repeated transmissions of the second symbol are performed on each transmission resource of the P transmission resources, where P is an integer greater than or equal to 1, T is an integer greater than or equal to 1, and N = P*T.

In an implementation, the second sending module 102 in the apparatus is configured to transmit the second symbol on V transmission resources, where the second symbol includes W sets of data symbols, and N repeated transmissions of at least one set of data symbols among the W sets of data symbols are performed on each transmission resource of the V transmission resources, where V is an integer greater than or equal to 1, and W is an integer greater than or equal to 1.

In an implementation, the data symbol in the apparatus includes at least one piece of the following information: payload, identification information, information of at least one pilot of the X pilots, sequence information, or transmission resource information.

FIG. 8 is a structural diagram of another transmission apparatus according to an embodiment of the present application. The apparatus can perform the transmission method provided in any embodiment of the present application, and has function modules and beneficial effects corresponding to the method performed. The apparatus may be implemented by software and/or hardware. As shown in FIG. 8, the apparatus provided in the embodiment of the present application includes a first acquisition module 201 and a second acquisition module 202.

The first acquisition module 201 is configured to acquire a symbol obtained after M repeated transmissions of a first symbol, where the first symbol includes a symbol of X pilots, X is an integer greater than or equal to 0, and M is an integer greater than or equal to 1.

The second acquisition module 202 is configured to acquire a symbol obtained after N repeated transmissions of a second symbol, where the second symbol includes a data symbol, and N is an integer greater than or equal to 1.

In the embodiment of the present application, the first acquisition module 201 acquires the symbol obtained after the M repeated transmissions of the first symbol, and the second acquisition module 202 acquires the symbol obtained after the N repeated transmissions of the second symbol, so the accuracy of channel estimation and time-frequency offset estimation can be improved, and more terminal devices are supported to perform data transmission; in this manner, transmission resources can be saved, and the transmission performance and the transmission capacity of the system can be improved.

In an implementation, the first symbol in the apparatus further includes a part of data symbols, and accordingly, the second symbol in the apparatus includes the remaining data symbol except the part of data symbols.

In an implementation, in the apparatus, the value of M is larger than the value of N.

In an implementation, in the apparatus, the value of N is larger than the value of M.

In an implementation, the apparatus further includes a detection module.

The detection module is configured to detect the symbol obtained after the M repeated transmissions of the first symbol and the symbol obtained after the N repeated transmissions of the second symbol to acquire a detection result of the symbol obtained after the M repeated transmissions of the first symbol and the symbol obtained after the N repeated transmissions of the second symbol.

Further, in an implementation, the apparatus further includes a third acquisition module.

The third acquisition module is configured to acquire at least one piece of the following information according to the detection result: payload, identification information, information of at least one pilot of the X pilots, sequence information or transmission resource information.

FIG. 9 is a structural diagram of an electronic device according to an embodiment of the present application. The electronic device includes a processor 62 and a memory 61. One or more processors 62 may be included in the electronic device. One processor 62 is shown as an example in FIG. 9. The processor 62 and the memory 61 in the electronic device may be connected via a bus or in other manners. The connection via a bus is shown as an example in FIG. 9.

As a computer-readable storage medium, the memory 61 may be configured to store software programs, computer-executable programs and modules, such as programs corresponding to any transmission method in the embodiments of the present application and modules (the first sending module 101 and the second sending module 102, and/or the first acquisition module 201 and the second acquisition module 202) corresponding to the transmission apparatus in the embodiments of the present application. The processor 62 executes software programs, instructions and modules stored in the memory 61 to perform multiple functions and data processing of the electronic device, that is, to perform the preceding transmission method.

The memory 61 may mainly include a program storage region and a data storage region. The program storage region may store an operating system and a program required by at least one function. The data storage region may store data created based on the use of the electronic device. Additionally, the memory 61 may include a high-speed random-access memory or a nonvolatile memory such as at least one disk memory, a flash memory or another nonvolatile solid-state memory. In some examples, the memory 61 may further include memories that are remotely disposed relative to the processor 62. These remote memories may be connected to the electronic device via a network. Examples of the preceding network include, but are not limited to, the Internet, an intranet, a local area network, a mobile communication network and a combination thereof.

An embodiment of the present application further provides a storage medium containing computer-executable instructions which, when executed by a computer processor, cause the computer processor to perform a transmission method.

In an implementation, the transmission method includes as follows: performing M repeated transmissions on a first symbol, where the first symbol includes a symbol of X pilots, X is an integer greater than or equal to 0, and M is an integer greater than or equal to 1; and performing N repeated transmissions on a second symbol, where the second symbol includes a data symbol, and N is an integer greater than or equal to 1.

In an implementation, the transmission method includes as follows: acquiring a symbol obtained after M repeated transmissions of a first symbol, where the first symbol includes a symbol of X pilots, X is an integer greater than or equal to 0, and M is an integer greater than or equal to 1; and acquiring a symbol obtained after N repeated transmissions of a second symbol, where the second symbol includes a data symbol, and N is an integer greater than or equal to 1. From the preceding description of implementations, it is apparent to those skilled in the art that the present application may be implemented by use of software and necessary general-purpose hardware or may be implemented by hardware. Based on this understanding, the technical solutions of the present application may be embodied in the form of a software product. The software product in a computer may be stored in a computer-readable storage medium such as a floppy disk, a read-only memory (ROM), a random-access memory (RAM), a flash memory, a hard disk or an optical disc in the computer and includes multiple instructions for enabling a computer device (which may be a personal computer, a server or a network device) to perform the methods in multiple embodiments of the present application.

It is to be noted that units and modules included in the embodiment of the preceding apparatus are just divided according to functional logic, and the division is not limited to this as long as the corresponding functions can be implemented. Additionally, the specific names of function units are just intended for distinguishing and are not intended to limit the scope of the present application.

It is to be understood by those having ordinary skill in the art that some or all steps of the preceding method and function modules/units in the preceding apparatus or device may be implemented as software, firmware, hardware and suitable combinations thereof.

In the hardware implementation, the division of the function modules/units in the preceding description may not correspond to the division of physical components. For example, one physical component may have multiple functions, or one function or step may be performed cooperatively by multiple physical components. Some or all physical components may be implemented as software executed by a processor such as a central processing unit, a digital signal processor or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media include volatile and nonvolatile media as well as removable and non-removable media implemented in any method or technology for storing information (such as computer-readable instructions, data structures, program modules or other data). The computer storage media include, but are not limited to, a RAM, a ROM, an electrically erasable programmable read-only memory (EEPROM), a flash memory or other memory technologies, a compact disc read-only memory (CD-ROM), a digital video disc (DVD) or other optical disc memories, magnetic cassettes, magnetic tapes, magnetic disk memories or other magnetic storage apparatuses, or any other media used for storing the desired information and accessible by a computer. Additionally, as is known to those having ordinary skill in the art, the communication media generally include computer-readable instructions, data structures, program modules or other data in carriers or in modulated data signals transported in other transport mechanisms and may include any information delivery medium.

The preceding content illustrates the alternative embodiments of the present application with reference to the drawings and is not intended to limit the scope of the present application. Any modifications, equivalent replacements and improvements made by those skilled in the art without departing from the scope and substantive content of the present application should be within the scope of the present application.

## Claims

1.   A transmission method, the method being applied to a transmitting side and comprising:

performing M repeated transmissions on a first symbol, wherein the first symbol comprises a symbol of X pilots, X is an integer greater than or equal to 0, and M is an integer greater than or equal to 1; and
performing N repeated transmissions on a second symbol, wherein the second symbol comprises a data symbol, and N is an integer greater than or equal to 1.

2.   The method according to claim 1, wherein the first symbol further comprises a part of data symbols, and the second symbol comprises a remaining data symbol of the data symbols except the part of data symbols.

3.   The method according to claim 1, wherein a value of M is greater than a value of N.

4.   The method according to claim 1, wherein a value of N is greater than a value of M.

5.   The method according to claim 1, wherein performing the M repeated transmissions on the first symbol comprises:
performing M1 repeated transmissions on the first symbol according to a first repeated transmission mode, and then performing M2 repeated transmissions on a symbol obtained after the M1 repeated transmissions of the first symbol according to a second repeated transmission mode, wherein M1 and M2 are each an integer greater than or equal to 1, and M = M1*M2.

6. The method according to claim 1, wherein performing the M repeated transmissions on the first symbol comprises:
   spreading the first symbol by using a sequence of a length of L to obtain a spread symbol, and performing U repeated transmissions on the spread symbol, wherein L is an integer greater than 1, U is an integer greater than or equal to 1, and M = L * U.

7. The method according to claim 1, wherein performing the M repeated transmissions on the first symbol comprises:
   transmitting the first symbol on H transmission resources, wherein transmitting the first symbol on the H transmission resources comprises: performing, on each transmission resource of the H transmission resources, Q repeated transmissions on the first symbol, wherein H is an integer greater than or equal to 1, Q is an integer greater than or equal to 1, and M = H*Q.

8. The method according to claim 1, wherein performing the M repeated transmissions on the first symbol comprises:
   transmitting the first symbol on J transmission resources, wherein transmitting the first symbol on the J transmission resources comprises: performing, on each transmission resource of the J transmission resources, M repeated transmissions on a symbol of at least one pilot of the X pilots, wherein J is an integer greater than or equal to 1.

9. The method according to claim 1, wherein performing the N repeated transmissions on the second symbol comprises:
   performing N1 repeated transmissions on the second symbol according to a third repeated transmission mode, and then performing N2 repeated transmissions on a symbol obtained after the N1 repeated transmissions of the second symbol according to a fourth repeated transmission mode, wherein N1 and N2 are each an integer greater than or equal to 1, and N = N1*N2.

10. The method according to claim 1, wherein performing the N repeated transmissions on the second symbol comprises:
    spreading the second symbol by using a sequence of a length of G to obtain a spread symbol, and performing R repeated transmissions on the spread symbol, wherein G is an integer greater than 1, R is an integer greater than or equal to 1, and N = G*R.

11. The method according to claim 1, wherein performing the N repeated transmissions on the second symbol comprises:
    transmitting the second symbol on P transmission resources, wherein transmitting the second symbol on the P transmission resources comprises: performing, on each transmission resource of the P transmission resources, T repeated transmissions on the second symbol, wherein P is an integer greater than or equal to 1, T is an integer greater than or equal to 1, and N = P*T.

12. The method according to claim 1, wherein performing the N repeated transmissions on the second symbol comprises:
    transmitting the second symbol on V transmission resources, wherein the second symbol comprises W sets of data symbols, and transmitting the second symbol on the V transmission resources comprises: performing, on each transmission resource of the V transmission resources, N repeated transmissions on at least one set of data symbols among the W sets of data symbols, wherein V is an integer greater than or equal to 1, and W is an integer greater than or equal to 1.

13. The method according to claim 1, wherein the data symbol comprises at least one piece of the following information: payload, identification information, information of at least one pilot of the X pilots, sequence information, or transmission resource information.

14. A transmission method, the method being applied to a receiving side and comprising:

    acquiring a symbol obtained after M repeated transmissions of a first symbol, wherein the first symbol comprises a symbol of X pilots, X is an integer greater than or equal to 0, and M is an integer greater than or equal to 1; and
    acquiring a symbol obtained after N repeated transmissions of a second symbol, wherein the second symbol comprises a data symbol, and N is an integer greater than or equal to 1.

15. The method according to claim 14, wherein the first symbol further comprises a part of data symbols, and the second symbol comprises a remaining data symbol of the data symbols except the part of data symbols.

16. The method according to claim 14, wherein a value of M is greater than a value of N.

17. The method according to claim 14, wherein a value of N is greater than a value of M.

18. The method according to claim 14, further comprising:

detecting the symbol obtained after the M repeated transmissions of the first symbol and the symbol obtained after the N repeated transmissions of the second symbol to acquire a detection result of the symbol obtained after the M repeated transmissions of the first symbol and the symbol obtained after the N repeated transmissions of the second symbol.

19. The method according to claim 18, further comprising:
acquiring at least one piece of the following information according to the detection result: payload, identification information, information of at least one pilot of the X pilots, sequence information, or transmission resource information.

20. An electronic device, comprising:

at least one processor; and
a memory configured to store at least one program;
wherein the at least one program, when executed by the at least one processor, causes the at least one processor to perform the method according to any one of claims 1 to 19.

21. A computer-readable storage medium storing at least one program which, when executed by at least one processor, causes the at least one processor to perform the method according to any one of claims 1 to 19.

Perform M repeated transmissions on a first symbol, where the first symbol includes a symbol of X pilots, X is an integer greater than or equal to 0, and M is an integer greater than or equal to 1 ⌇ 110

Perform N repeated transmissions on a second symbol, where the second symbol includes a data symbol, and N is an integer greater than or equal to 1 ⌇ 120

**FIG. 1**

▨ Symbol of Pilot    ☐ Data symbol

| Subframe 1 | Subframe 2 | Subframe 3 | Subframe F |
|---|---|---|---|

Symbols of pilot 1    Symbols of pilot 2

Repeatedly transmit Subframe 1 M times

Repeatedly transmit Subframe 2 M times

Repeatedly transmit Subframe 3 N times

Repeatedly transmit Subframe F N times

**FIG. 2**

| Subframe 1 | Subframe 2 | Subframe 3 | Subframe 4 | Subframe 5 | Subframe 6 | Subframe F−1 | Subframe F |
|---|---|---|---|---|---|---|---|

▨ Symbol of Pilot
☐ Data symbol

Symbols of pilot 1    Symbols of pilot 1    Symbols of pilot 2    Symbols of pilot 2

Repeatedly transmit Subframe 1 M2 times

Repeatedly transmit Subframe 2 M2 times

Repeatedly transmit Subframe F−1 N times

Repeatedly transmit Subframe F N times

**FIG. 3**

Symbol of
Pilot

Data symbol

| Subframe 1 | Subframe 2 | Subframe 3 | Subframe F |

Symbols   Symbols
of pilot 1   of pilot 1

Symbols   Symbols
of pilot 2   of pilot 2

Repeatedly transmit
Subframe 1 M2 times

Repeatedly transmit
Subframe 2 M2 times

Repeatedly transmit
Subframe 3 N times

Repeatedly transmit
Subframe F N times

**FIG. 4**

| Subframe 1 | Subframe 2 | Subframe 3 | Subframe 4 | Subframe F-1 | Subframe F |

Symbol of Pilot

Data symbol

Repeatedly transmit
Subframe 1 N times

Repeatedly transmit
Subframe 2 N times

Repeatedly transmit
Subframe 3 N times

Repeatedly transmit
Subframe F N times

Symbols of pilot 1 and symbols of pilot 2 are mapped to pilot symbol positions
on N*F subframes respectively, where the symbols of pilot 1 are repeatedly
mapped M times, and the symbols of pilot 2 are repeatedly mapped M times

**FIG. 5**

Acquire a symbol obtained after M repeated transmissions of a first symbol,
where the first symbol includes a symbol of X pilots, X is an integer greater
than or equal to 0, and M is an integer greater than or equal to 1
— 200

Acquire a symbol obtained after N repeated transmissions of a second
symbol, where the second symbol includes a data symbol, and N is an
integer greater than or equal to 1
— 210

**FIG. 6**

| First sending module<br>101 | Second sending module<br>102 |

**FIG. 7**

| First acquisition module<br>201 | Second acquisition module<br>202 |

**FIG. 8**

| Memory | 61 |

| Processor | 62 |

**FIG. 9**

## INTERNATIONAL SEARCH REPORT

| International application No. |
| --- |
| **PCT/CN2023/084340** |

**A. CLASSIFICATION OF SUBJECT MATTER**

H04B17/309(2015.01)i

According to International Patent Classification (IPC) or to both national classification and IPC

**B. FIELDS SEARCHED**

Minimum documentation searched (classification system followed by classification symbols)

IPC: H04B H04W H04L

Documentation searched other than minimum documentation to the extent that such documents are included in the fields searched

Electronic data base consulted during the international search (name of data base and, where practicable, search terms used)

CNTXT, WPABS, WPABSC, ENTXT, ENTXTC, VEN: 免调度, 免授权, 符号, 数据, 导频, 重复, 多次, 传输, 发送, no scheduling, grant-free, symbol, data, pilot, repetition, multiple times, transmission, send

**C. DOCUMENTS CONSIDERED TO BE RELEVANT**

| Category* | Citation of document, with indication, where appropriate, of the relevant passages | Relevant to claim No. |
| --- | --- | --- |
| X | CN 111901055 A (ZTE CORP.) 06 November 2020 (2020-11-06)<br>description, paragraphs 33-163 | 1-21 |
| X | WO 2021207959 A1 (GUANGDONG OPPO MOBILE TELECOMMUNICATIONS CORP., LTD.) 21 October 2021 (2021-10-21)<br>description, page 4, line 30 to page 11, line 39 | 1-21 |
| A | CN 110149661 A (ZTE CORP.) 20 August 2019 (2019-08-20)<br>entire document | 1-21 |
| A | CN 110611958 A (ZTE CORP.) 24 December 2019 (2019-12-24)<br>entire document | 1-21 |
| A | CN 112583528 A (HUAWEI TECHNOLOGIES CO., LTD.) 30 March 2021 (2021-03-30)<br>entire document | 1-21 |
| A | WO 2020187132 A1 (HUAWEI TECHNOLOGIES CO., LTD.) 24 September 2020 (2020-09-24)<br>entire document | 1-21 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 June 2023** | **21 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/084340**

| Patent document cited in search report | | | Publication date (day/month/year) | Patent family member(s) | | | Publication date (day/month/year) |
|---|---|---|---|---|---|---|---|
| CN | 111901055 | A | 06 November 2020 | WO | 2021160010 | A1 | 19 August 2021 |
| | | | | EP | 4106230 | A1 | 21 December 2022 |
| | | | | US | 2023052896 | A1 | 16 February 2023 |
| | | | | IN | 202227038375 | A | 16 February 2023 |
| WO | 2021207959 | A1 | 21 October 2021 | CN | 115053600 | A | 13 September 2022 |
| CN | 110149661 | A | 20 August 2019 | WO | 2019158013 | A1 | 22 August 2019 |
| CN | 110611958 | A | 24 December 2019 | WO | 2021031804 | A1 | 25 February 2021 |
| CN | 112583528 | A | 30 March 2021 | | None | | |
| WO | 2020187132 | A1 | 24 September 2020 | CN | 111726311 | A | 29 September 2020 |

Form PCT/ISA/210 (patent family annex) (July 2022)